# EUROPEAN PATENT APPLICATION

(11) **EP 4 191 503 A1**
(43) Date of publication of application: **07.06.2023**
(21) Application number: 22189437.1
(22) Date of filing: 09.08.2022
(51) Int. Cl.: G06Q 30/0601

(54) **METHOD FOR PROCESSING LIVE STREAMING AND COMPUTER DEVICE**

(30) Priority: 01.12.2021 CN 202111454509
(71) Applicant: Beijing Dajia Internet Information Technology Co., Ltd., Beijing 100085 (CN)
(72) Inventor: LIU, Hao, Beijing, 100085 (CN); XIE, Jinghui, Beijing, 100085 (CN); WANG, Mingxin, Beijing, 100085 (CN)
(74) Representative: Yang, Shu

(57) **Abstract**

Provided is a method for processing live streaming. The method includes: receiving (201) a joint live streaming request initiated by a first anchor account; acquiring (202) the item information of the target item in response to an acceptance of the joint live streaming request by the second anchor account; and displaying (203) the item information of the target item in the virtual space of the second anchor account.

## Description

### TECHNICAL FIELD

The present disclosure relates to the field of internet technologies, and in particular, relates to a method for processing live streaming and a computer device.

### BACKGROUND

With the continuous development of live streaming and e-commerce, interaction between the two has become increasingly close. An anchor may post a variety of items in a live streaming room and introduce the items during live streaming to attract viewers to purchase the items in the live streaming room.

### SUMMARY

The present disclosure provides a method for processing live streaming and a computer device.

According to an aspect of embodiments of the present disclosure, a method for processing live streaming is provided. The method is performed by a terminal and includes: receiving a joint live streaming request initiated by a first object, wherein the joint live streaming request is used to request joint live streaming with a second object, the joint live streaming being performed to display, in a virtual space of the second object, item information of a target item of the first object; acquiring the item information of the target item in response to an acceptance of the joint live streaming request by the second object; and displaying the item information of the target item in the virtual space of the second object.

According to another aspect of the embodiments of the present disclosure, a method for processing live streaming is provided. The method is performed by a server and includes: in response to receiving a joint live streaming request initiated by a first object, sending the joint live streaming request to a second object, wherein the joint live streaming request is used to request joint live streaming with the second object, the joint live streaming being performed to display, in a virtual space of the second object, item information of a target item of the first object; acquiring the item information of the target item in response to an acceptance of the joint live streaming request by the second object; and sending the item information of the target item to the second object, wherein the item information is used to trigger display of the item information of the target item in the virtual space of the second object.

In some embodiments, the method further includes: acquiring at least one candidate object and joint collaboration information of the at least one candidate object, in response to receiving an object acquisition request of the first object, wherein the joint collaboration information is used to provide a reference for the first object in selecting the candidate object.

In some embodiments, acquiring the at least one candidate object and the joint collaboration information of the at least one candidate object includes at least one of followings: acquiring, based on an item type of the target item of the first object, at least one candidate object matching the item type and joint collaboration information of the at least one candidate object; acquiring, based on a history joint live streaming situation of the first object, at least one candidate object matching the history joint live streaming situation and joint collaboration information of the at least one candidate object; and acquiring, based on a level of the virtual space of the first object, at least one candidate object matching the level and joint collaboration information of the at least one candidate object.

### BRIEF DESCRIPTION OF THE DRAWINGS

FIG. 1 is a schematic diagram of an implementation environment of a method for processing live streaming according to some embodiments of the present disclosure;
FIG. 2 is a flowchart of a method for processing live streaming according to some embodiments of the present disclosure;
FIG. 3 is a flowchart of a method for processing live streaming according to some embodiments of the present disclosure;
FIG. 4 is a flowchart of a method for processing live streaming according to some embodiments of the present disclosure;
FIG. 5 is a schematic diagram of a live streaming interface of a first object according to some embodiments of the present disclosure;
FIG. 6 is a schematic diagram of another live streaming interface of a first object according to some embodiments of the present disclosure;
FIG. 7 is a schematic diagram of an item selection page according to some embodiments of the present disclosure;
FIG. 8 is a schematic diagram of a request page of a second object according to some embodiments of the present disclosure;
FIG. 9 is a schematic diagram of a live streaming interface of a second object according to some embodiments of the present disclosure;
FIG. 10 is a schematic diagram of another live streaming interface of a second object according to some embodiments of the present disclosure;
FIG. 11 is a schematic diagram of another live streaming interface of a second object according to some embodiments of the present disclosure;
FIG. 12 is a schematic diagram of another live streaming interface of a second object according to some embodiments of the present disclosure;
FIG. 13 is a schematic diagram of a details page of a first object according to some embodiments of the present disclosure;
FIG. 14 is a schematic diagram of modules for processing live streaming according to some embodiments of the present disclosure;
FIG. 15 is a block diagram of an apparatus for processing live streaming according to some embodiments of the present disclosure;
FIG. 16 is a block diagram of an apparatus for processing live streaming according to some embodiments of the present disclosure;
FIG. 17 is a block diagram of structure of a terminal according to some embodiments of the present disclosure; and
FIG. 18 is a block diagram of a server according to some embodiments of the present disclosure.

### DETAILED DESCRIPTION

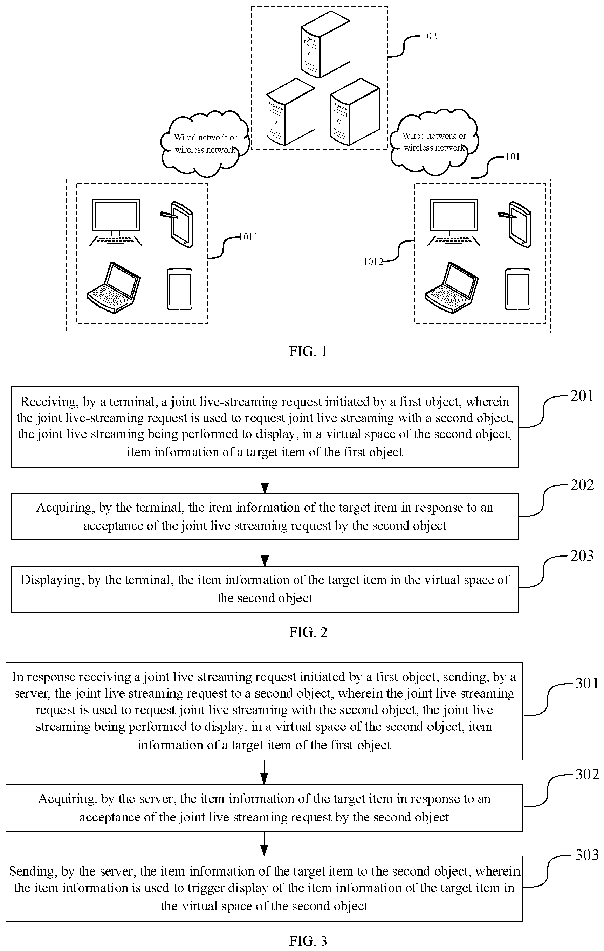

FIG. 1 is a schematic diagram of an implementation environment of a method for processing live streaming according to some embodiments of the present disclosure. Referring to FIG. 1, the implementation environment includes a terminal 101.

The terminal 101 may be at least one of a smartphone, a smartwatch, a desktop computer, a handheld computer, a virtual reality terminal, an augmented reality terminal, a wireless terminal, a laptop computer, and the like. The terminal 101 has a communication function and can access a wired network or a wireless network. The terminal 101 may generally refer to one of a plurality of terminals, and the embodiment is only illustrated by using the terminal 101 as an example. A person skilled in the art can understand that there may be more or fewer terminals.

An application with a live streaming function may run on the terminal 101. In the embodiments of the present disclosure, the terminal 101 includes a first terminal 1011 and a second terminal 1012. The first terminal 1011 is a terminal corresponding to a first anchor account, and the first anchor account is an anchor account of an e-commerce type. The second terminal 1012 is a terminal corresponding to a second anchor account, and the second anchor account is an anchor account of any type, such as an anchor account of a game type or a celebrity type. Embodiments of the present disclosure subsequently use a first object to refer to the first anchor account and a second object to refer to the second anchor account.

In the embodiment of the present disclosure, the first terminal 1011 is configured to send a joint live streaming request to a server in response to initiation of the joint live streaming request to the second object by the first object, to request joint live streaming with the second object and display item information of a target item of the first object in a virtual space of the second object. The second terminal 1012 is configured to receive the joint live streaming request initiated by the first object, acquire the item information of the target item in response to an acceptance of the joint live streaming request by the second object, and display the item information of the target item in the virtual space of the second object.

In some embodiments, the terminal 101 may be directly or indirectly connected to a server 102 through wired or wireless communication, which is not limited in the embodiments of the present disclosure.

The server 102 may be an independent physical server, a server cluster or a distributed file system composed of a plurality of physical servers, or a cloud server providing basic cloud computing services, such as a cloud service, a cloud database, cloud computing, a cloud function, cloud storage, a network service, cloud communication, a middleware service, a domain name service, a security service, a content delivery network (CDN), and big data and artificial intelligence platforms.

The server 102 may be a backend server of the application with the live streaming function. In the embodiments of the present disclosure, the server is configured to implement communication between the first terminal 1011 and the second terminal 1012. The server sends the joint live streaming request to the second object in response to receiving the joint live streaming request initiated by the first object, acquires the item information of the target item in response to the acceptance of the joint live streaming request by the second object, and sends the item information of the target item to the second object to trigger display of the item information of the target item in the virtual space of the second object.

In some embodiments, there may be more or fewer servers 102, which is not limited in the embodiments of the present disclosure. In some embodiments, the server 102 may further include other functional servers to provide more comprehensive and diverse services.

FIG. 2 is a flowchart of a method for processing live streaming according to some embodiments of the present disclosure. As shown in FIG. 2, the method is performed by a terminal and includes the following processes 201 to 203. The terminal corresponds to a second anchor account or is the terminal into which the second anchor account is logged.

In 201, the terminal receives a joint live streaming request initiated by a first object, wherein the joint live streaming request is used to request joint live streaming with a second object, the joint live streaming being performed to display, in a virtual space of the second object, item information of a target item of the first object. In some embodiments, the first object is a first anchor account, and the second object is a second anchor account.

In 202, the terminal acquires the item information of the target item in response to an acceptance of the joint live streaming request by the second object.

In 203, the terminal displays the item information of the target item in the virtual space of the second object.

In the technical solution provided in the embodiment of the present disclosure, when the first object requests to perform the joint live streaming with the second object, the item information of the target item of the first object is acquired during the current joint live streaming and the item information of the target item is displayed in the virtual space of the second object. In this way, a viewer in the virtual space of the second object can trade the target item of the first object in the virtual space of the second object without exiting the virtual space of the second object. As result, an operation path of item trading is simplified, human-machine interaction efficiency is improved, and it is easier for the viewers to purchase the target item of the first object during the joint live streaming.

In some embodiments, the item information of the target item includes a trading control corresponding to the target item. Displaying the item information of the target item in the virtual space of the second object includes: displaying the trading control corresponding to the target item in the virtual space of the second object, wherein the trading control is used to trade the target item in the virtual space of the second object.

In some embodiments, the item information of the target item includes store information of a store to which the target item belongs. Displaying the item information of the target item in the virtual space of the second object includes: displaying the store information in the virtual space of the second object.

In some embodiments, the item information of the target item includes a first access portal of the store to which the target item belongs. Displaying the item information of the target item in the virtual space of the second object includes: displaying the first access portal in the virtual space of the second object, wherein the first access portal is used to trigger an access to the store.

In some embodiments, the item information of the target item includes a second access portal of a virtual space of the first object. Displaying the item information of the target item in the virtual space of the second object includes: displaying the second access portal in the virtual space of the second object, wherein the second access portal is configured to cause an access to the virtual space of the first object to be triggered.

In some embodiments, displaying the item information of the target item in the virtual space of the second object includes: displaying the item information of the target item in a first item list of the virtual space of the second object. The method further includes: displaying item information of an item of the second object in a second item list of the virtual space of the second object.

In some embodiments, displaying the item information of the target item in the virtual space of the second object includes: displaying the item information of the target item in the virtual space of the second object in response to live streaming time of the second object reaching target time.

In some embodiments, the method further includes: displaying a live streaming announcement of the target item, wherein the live streaming announcement is configured to prompt an upcoming live streaming introduction to the item information of the target item.

FIG. 3 is a flowchart of a method for processing live streaming according to some embodiments of present disclosure. As shown in FIG. 3, the method is performed by a server and includes the following processes 301 to 303.

In 301, in response to receiving a joint live streaming request initiated by a first object, the server sends the joint live streaming request to a second object, wherein the joint live streaming request is used to request joint live streaming with the second object, the joint live streaming being performed to display, in a virtual space of the second object, item information of a target item of the first object.

In 302, the server acquires the item information of the target item in response to an acceptance of the joint live streaming request by the second object.

In 303, the server sends the item information of the target item to the second object, wherein the item information is used to trigger display of the item information of the target item in the virtual space of the second object.

In the technical solution provided in the embodiment of the present disclosure, in the case that the first object requests to perform the joint live streaming with the second object, by acquiring the item information of the target item of the first object during the current joint live streaming and displaying the item information of the target item in the virtual space of the second object, a viewer in the virtual space of the second object can trade the target item of the first object in the virtual space of the second object without exiting the virtual space of the second object. In this way, human-machine interaction efficiency is improved, such that more viewers can be attracted to purchase the target item of the first object.

In some embodiments, in response to receiving the joint live streaming request initiated by the first object, sending the joint live streaming request to the second object includes: acquiring object information of the second object from the joint live streaming request in response to receiving the joint live streaming request initiated by the first object; and sending the joint live streaming request to the second object based on the object information of the second object.

In some embodiments, acquiring the item information of the target item includes: acquiring the item information of the target item from an item information database based on an item identifier of the target item carried in the joint live streaming request, wherein item identifiers and item information of a plurality of items are stored in the item information database.

In some embodiments, the method further includes: associating the item information of the target item with the virtual space of the second object.

In some embodiments, the method further includes: generating an electronic receipt of the target item based on the item information of the target item and the object information of the second object, in response to trading of the target item in the virtual space of the second object by any viewer in the virtual space of the second object.

In some embodiments, the method further includes: sending a target virtual resource to the second object based on the object information of the second object carried in the electronic receipt of the target item, wherein the target virtual resource is a virtual resource required for the second object to perform the joint live streaming.

In some embodiments, the target virtual resource is determined based on a quantity of viewers in the virtual space of the second object who perform item trading actions in the virtual space of the second object.

In some embodiments, the target virtual resource is determined based on item trading actions performed in the virtual space of the second object by the viewers in the virtual space of the second object.

In some embodiments, the method further includes: acquiring at least one candidate object and joint collaboration information of the at least one candidate object, in response to receiving an object acquisition request of the first object, wherein the joint collaboration information is used to provide a reference for the first object in selecting the candidate object.

In some embodiments, acquiring the at least one candidate object and the joint collaboration information of the at least one candidate object includes at least one of the followings:
acquiring, based on an item type of the target item of the first object, at least one candidate object matching the item type and joint collaboration information of the at least one candidate object;
acquiring, based on a history joint live streaming situation of the first object, at least one candidate object matching the history joint live streaming situation and joint collaboration information of the at least one candidate object; and
acquiring, based on a level of a virtual space of the first object, at least one candidate object matching the level and joint collaboration information of the at least one candidate object. In some embodiments, the level of the virtual space of the first object is a store level of the virtual space of the first object, an anchor level of the virtual space of the first object, or a popularity level of the virtual space of the first object.

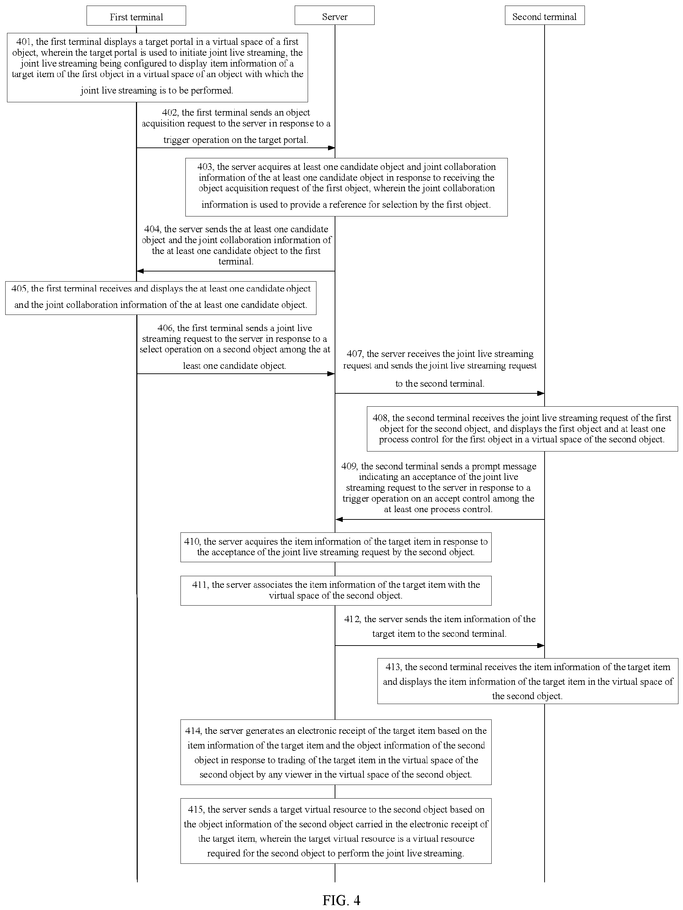

FIG. 2 and FIG. 3 show basic processes of the present disclosure. The solutions provided in the present disclosure is further described hereinafter based on an implementation. FIG. 4 is a flowchart of a method for processing live streaming according to some embodiments of present disclosure. Referring to FIG. 4, the method includes the following processes 401 to 415.

In 401, a first terminal displays a target portal in a virtual space of a first object, wherein the target portal is used to initiate joint live streaming, the joint live streaming being configured to display item information of a target item of the first object in a virtual space of an object with which the joint live streaming is to be performed.

In the embodiment of the present disclosure, the first object is a first anchor account, and the first anchor account is an anchor account of an e-commerce type. The first terminal is a terminal corresponding to the first object, that is, a terminal on which the first anchor account logs. A virtual space is a live streaming room. The virtual space of the first object is a live streaming room of the first anchor account.

In some embodiments, the target portal may be a function control for initiating joint live streaming. The joint live streaming is configured to display the item information of the target item of the first object in the virtual space of the object with which the joint live streaming is to be performed, such that a viewer in the virtual space of the object with which the joint live streaming is to be performed can perform item trading in the virtual space of the object with which the joint live streaming is to be performed. An item is a to-be-traded commodity in a virtual space. Item trading is a process of ordering and paying based on a commodity.

In some embodiments, the process of displaying the target portal by the first terminal includes: displaying a joint live streaming portal in the virtual space of the first object, wherein the joint live streaming portal is used to initiate joint live streaming. The first object displays at least one type of portal in response to a trigger operation on the joint live streaming portal, wherein the at least one type of portal includes the target portal. In the embodiments, by providing the joint live streaming portal, the first object can trigger the display of the target portal through the joint live streaming portal, then trigger the initiation of the joint live streaming through the target portal, thereby simplifying an operation procedure and improving human-machine interaction efficiency.

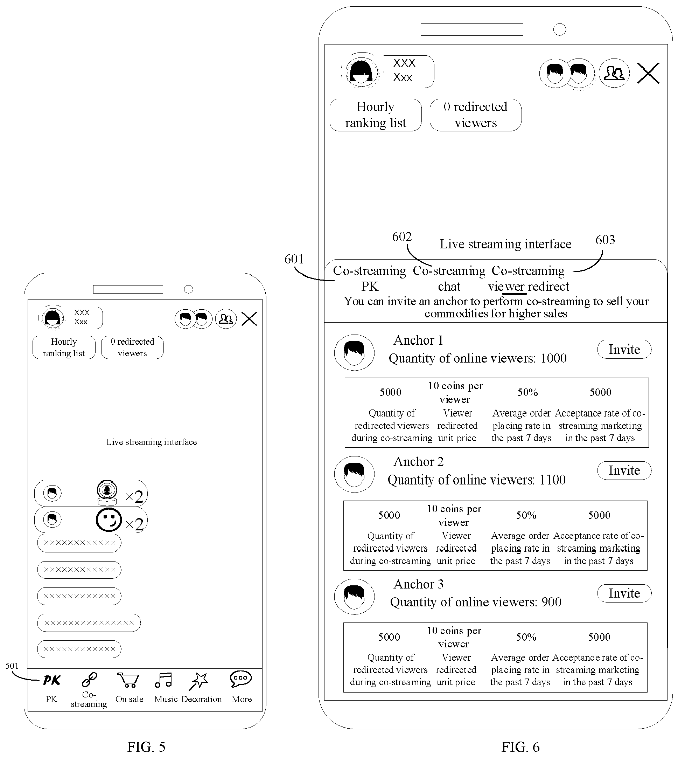

For example, FIG. 5 is a schematic diagram of a live streaming interface of the first object according to some embodiments of present disclosure. Referring to FIG. 5, the joint live streaming portal is a "PK" portal 501 shown in FIG. 5 in the live streaming interface shown in FIG. 5. In some embodiments, the first terminal displays a live streaming interface shown in FIG. 6 in response to a trigger operation on the "PK" portal 501. FIG. 6 is a schematic diagram of another live streaming interface of the first object according to some embodiments of present disclosure. Referring to FIG. 6, at least one type of portal is displayed in the live streaming interface, which includes a "co-streaming PK" portal 601, a "co-streaming chat" portal 602, and a "co-streaming viewer redirect" portal 603. The target portal may be the "co-streaming viewer redirect" portal 603. PK is originated from the word "Player Killing" used for online games, which can be considered as a noun or a verb. PK has a plurality of meanings such as challenge, fight and defeat. In the embodiments of the present disclosure, PK means defeat, and the "PK portal" refers to an entry for playing a battle to defeat another object. In some embodiments, co-streaming between two objects performing live streaming refers to a video call between the two objects, thereby realizing joint live streaming. Viewer redirection refers to directing a viewer in a virtual space of one object to a virtual space of another object.

It should be noted the above target portal is illustrated by taking the target portal as a lower-level portal of the joint live streaming portal as example. In some embodiments, the target portal may be an independent portal in the virtual space. For example, the target portal is located in a menu bar. Alternatively, the target portal may be an independent control in the virtual space. In some embodiments, the target portal may be displayed at any position in the virtual space.

In 402, the first terminal sends an object acquisition request to a server in response to a trigger operation on the target portal.

The trigger operation may be any one of a tap operation, a select operation or a slide operation. The "co-streaming viewer redirect" portal 603 shown in FIG. 6 is taken as an example. The first terminal sends the object acquisition request to the server in response to a tap operation on the "co-streaming viewer redirect" portal 603. In the embodiments of the present disclosure, the object acquisition request is used to request to acquire at least one candidate object and joint collaboration information of the at least one candidate object for selection by the first object.

In 403, the server acquires at least one candidate object and joint collaboration information of the at least one candidate object in response to receiving the object acquisition request of the first object, wherein the joint collaboration information is used to provide a reference for selection by the first object.

In the embodiments of the present disclosure, the at least one candidate object is at least one candidate anchor account. The at least one candidate anchor account is an anchor account of any type, such as an anchor account of a game type, a celebrity type or the e-commerce type.

The joint collaboration information is used to provide a reference for the first object in selecting the candidate object. That is, the joint collaboration information is reference information used when the first object selects the object to perform the joint live streaming, and the joint collaboration information may be understood as viewer redirection reference information. In some embodiments, the joint collaboration information includes basic viewer redirection information, such as a quantity of virtual resources required for the candidate object to perform the joint live streaming, or virtual resource allocation information. The quantity of virtual resources represents an income acquired by the candidate object. For example, the virtual resources may be virtual currency. Corresponding, the quantity of virtual resources may be a quantity of virtual currency, such as 10 gold coins per viewer. For example, referring to FIG. 6, in the live streaming interface shown in FIG. 6, an anchor 1 is taken as an example, and the quantity of virtual resources is the "viewer redirection unit price: 10 coins per viewer" shown in FIG. 6. The virtual resource allocation information represents a proportion of the income acquired by the candidate object in an overall income, that is, a proportion of an income allocated to the candidate object, such as 10%. In some embodiments, the virtual resource allocation information is determined based on a level of a virtual space of the candidate object. The level of the virtual space may be a store level of the virtual space, an anchor level of the virtual space, or a popularity level of the virtual space. The higher the level of the virtual space, the larger proportion of the virtual resource is allocated. For example, in a case that the store level of the candidate object is 5, the virtual resource allocation information of the candidate object is 10%; and in a case that the store level of the candidate object is 8, the virtual resource allocation information of the candidate object is 20%. In some embodiments, the virtual resource allocation information may be a predetermined fixed proportion, such as 10%.

In some embodiments, the joint collaboration information may further include additional viewer redirection information. The additional viewer redirection information includes at least one of: a quantity of online viewers in the virtual space of the candidate object, a success rate of accepting joint live streaming by the candidate object, a quantity of redirected viewers when the candidate object performs history joint live streaming, and a quantity of successful item trading when the candidate object performs the history joint live streaming. For example, referring to FIG. 6, in the live streaming interface shown in FIG. 6, the anchor 1 is taken as an example, and the quantity of online viewers in the virtual space of the candidate object is the "quantity of online viewers: 1000" shown in FIG. 6. In some embodiments, the success rate of accepting joint live streaming by the candidate object is a success rate of accepting joint live streaming by the candidate object within a first past time period. The first time period is a predetermined time period, such as 7 days. Referring to FIG. 6, the anchor 1 is taken as an example, and the success rate of accepting joint live streaming by the candidate object may be the "acceptance rate of co-streaming marketing in the past 7 days: 5000" shown in FIG. 6. The success rate of accepting joint live streaming by the candidate object may be a ratio of the number of times the anchor accepts the joint live streaming request to the number of times the anchor performs live streaming. For example, referring to FIG. 6, in the live streaming interface shown in FIG. 6, the anchor 1 is taken as an example, and the quantity of redirected viewers when the candidate object performs the history joint live streaming is the "quantity of redirected viewers during co-streaming: 5000" shown in FIG. 6. In some embodiments, the quantity of successful item trading when the candidate object performs the history joint live streaming is a quantity of successful item trading when the candidate object performs the history joint live streaming within a second past time period. The second time period is a predetermined time period, such as 7 days. In some embodiments, the additional viewer redirection information may be a success rate of item trading when the candidate object performs the history joint live streaming, such as a success rate of item trading when the candidate object performs the history joint live streaming within the second past time period. For example, referring to FIG. 6, in the live streaming interface shown in FIG. 6, the anchor 1 is taken as an example, and the success rate of item trading when the candidate object performs the history joint live streaming may be the "average order placing rate in the past 7 days: 50%" shown in FIG. 6.

It should be noted that the joint collaboration information may further include other information for introducing the second object for the first object, such as a specific type of information set by the first object, which is not limited in the embodiments of the present disclosure. In the foregoing embodiments, by acquiring the joint collaboration information, the joint collaboration information can be displayed in the virtual space of the first object, such that an amount of information displayed in the virtual space of the first object can be increased. Therefore, the first object can make a decision quickly by knowing the joint collaboration information of at least one second object in time. The human-machine interaction efficiency is improved.

In some embodiments, the process of acquiring the at least one candidate object and the joint collaboration information of the at least one candidate object by the server includes at least one of the followings.

In some embodiments, the server acquires, based on an item type of the target item of the first object, at least one candidate object matching the item type and joint collaboration information of the at least one candidate object.

The item type is a type of an item in the virtual space of the first object, such as a food type, a clothing type, or an electronic product type. In some embodiments, item type matching means that item types of virtual spaces of two objects are the same, or a similarity between the item types of the virtual spaces of the two objects reaches a similarity threshold.

In some embodiments, upon receiving the object acquisition request, the server acquires, based on the item type of the virtual space of the first object carried in the object acquisition request, the at least one candidate object matching the item type of the virtual space of the first object from an object information database associated with the server, and acquires the joint collaboration information of the at least one candidate object. The object information database is used to store item types of virtual spaces of a plurality of objects.

In some embodiments, the server acquires, based on a history joint live streaming situation of the first object, at least one candidate object matching the history joint live streaming situation and joint collaboration information of the at least one candidate object.

The history joint live streaming situation is a live streaming situation when the first object performs history joint live streaming, which includes an object selected by the first object, an object that brings benefits to the first object, or other information when the first object performs the history joint live streaming. In some embodiments, the history joint live streaming situation is the object selected by the first object when the first object performed the joint live streaming in the past. History joint live streaming situation matching means that the candidate object is the object selected by the first object when the first object performed the history joint live streaming, or a correlation between the candidate object and the object previously selected by the first object when the first object performed the history joint live streaming meets a specific condition.

In some embodiments, upon receiving the object acquisition request, the server acquires, based on the history joint live streaming situation of the first object, the at least one candidate object matching the history joint live streaming situation of the first object from the object information database associated with the server, and acquires the joint collaboration information of the at least one candidate object. The object information database is used to store history joint live streaming information of a plurality of objects, the history joint live streaming information being used to indicate history joint live streaming situations of the objects.

In some embodiments, the server acquires, based on a level of the virtual space of the first object, at least one candidate object matching the level and joint collaboration information of the at least one candidate object.

The level of the virtual space may be a store level of the virtual space, an anchor level of the virtual space, or a popularity level of the virtual space. In some embodiments, the level of the virtual space is the popularity level. The virtual space level matching means that popularity levels of two objects are the same, or a similarity between the popularity levels of the two objects reaches a similarity threshold.

In some embodiments, upon receiving the object acquisition request, the server acquires the at least one candidate object matching the level of the virtual space of the first object based on the level of the virtual space of the first object carried in the object acquisition request, and acquires the joint collaboration information of the at least one candidate object. The object information database is used to store levels of virtual spaces of a plurality of objects.

In the embodiments of the present disclosure, the at least one candidate object is recommended for the first object based on the item type, the history joint live streaming situation or the level of the virtual space of the first object, such that accuracy of the at least one recommended candidate object is improved.

In some embodiments, the first object may further set a filter condition or a focus condition to filter candidate objects, such that displayed candidate objects can meet requirement of the first object, which is not limited in the embodiments of the present disclosure.

In 404, the server sends the at least one candidate object and the joint collaboration information of the at least one candidate object to the first terminal.

In some embodiments, the server sends, based on object information of the first object carried in the object acquisition request, the at least one candidate object and the joint collaboration information of the at least one candidate object to the first terminal, to trigger display of the at least one candidate object and the joint collaboration information of the at least one candidate object in the virtual space of the first object by the first terminal. The object information of the first object is an object identifier of the first object. For example, the object identifier may be the first anchor account or an ID (identity) of the live streaming room of the first anchor account. By carrying the object information of the first object in the object acquisition request, the at least one candidate object and the joint collaboration information of the at least one candidate object can be sent based on the object information of the first object, thereby ensuring reliability of information transmission.

In 405, the first terminal receives and displays the at least one candidate object and the joint collaboration information of the at least one candidate object.

In some embodiments, the first terminal displays the at least one candidate object and the joint collaboration information of the at least one candidate object in a candidate object list.

For example, referring to FIG. 6, in the live streaming interface shown in FIG. 6, the "co-streaming viewer redirect" portal 603 is selected. In this case, the candidate object list is displayed in the live streaming interface shown in FIG. 6. The candidate object list includes the at least one candidate object, that is, the anchor 1, an anchor 2 and an anchor 3. In some embodiments, the process of displaying the at least one candidate object by the first terminal includes: displaying, by the first terminal, an object avatar of the at least one candidate object or an object name of the at least one candidate object. The object avatar is an avatar corresponding to an anchor account, and the object name is a name corresponding to the anchor account. In some embodiments, the first terminal displays the object avatar and the object name of the at least one candidate object. For example, referring to FIG. 6, object avatars and object names of the anchor 1, the anchor 2 and the anchor 3 are displayed in the live streaming interface shown in FIG. 6.

In some embodiments, in the case that the number of the candidate object is more than one, the first terminal sorts the candidate objects based on at least one of: a quantity of history joint live streaming performed by each of the candidate objects and an exposure click situation of each of the candidate objects.

The quantity of history joint live streaming performed by the candidate object is a number of times the candidate object performs joint live streaming with the first object. The exposure click situation of the candidate object is an exposure click rate when the candidate object is recommended by a server to the viewers for certain activities, that is, an exposure click rate when the candidate object is displayed. The exposure click rate when the candidate object is recommended may refer to a ratio of the number of times a viewer clicks the candidate object when the candidate object is recommended to the number of times the candidate object is recommended.

In some embodiments, the sorting process is performed based on the quantity of history joint live streaming performed by each of the candidate objects. In the case that there are more than one candidate object, the first terminal acquires a number of history joint live streaming performed by each of the candidate objects from history joint live streaming information of the candidate objects, and sorts the candidate objects in descending order of the number of history joint live streaming. The history joint live streaming information is used to indicate a history joint live streaming situation of the object and the candidate objects are ranked based on the quantity of history joint live streaming.

In some embodiments, the sorting process is performed based on the exposure click situation of each of the candidate objects. In the case that there is more than one candidate object, the first terminal acquires an exposure click situation, such as an exposure click rate, of the candidate objects from a history exposure record of the candidate objects, and sorts the candidate objects in descending order of the exposure click rate. The history exposure record is used to record exposure events of a plurality of candidate objects. The exposure event of the candidate object may refer to live streaming performed by the candidate object. For example, the candidate object performs live streaming, and the live streaming is the exposure event of the candidate object.

The sorting process mentioned above is illustrated by taking the first terminal as an execution entity. In some embodiments, the sorting process mentioned above may be jointly performed by the first terminal and the server. The corresponding process includes: sending, by the first terminal, the object acquisition request to the server in response to the trigger operation on the target portal; upon receiving the object acquisition request, acquiring, by the server, the at least one candidate object, sorting, by the server, the at least one candidate object in descending order of the quantity of history joint live streaming or the exposure click rate, and sending, by the server, sorting information of the at least one candidate object to the first terminal to trigger the display of the at least one candidate object based on the sorting information by the first terminal.

In the embodiments of the present disclosure, by sorting the at least one candidate object based on the quantity of history joint live streaming or the exposure click situation, a candidate object with a greater quantity of history joint live streaming or a higher exposure click situation ranks higher, such that the first object can quickly select the object with which the first object wants to joint live streaming, thereby improving the human-machine interaction efficiency. In some embodiments, the higher exposure click situation refers to a higher exposure click rate when the candidate object is recommended by the server to the viewers.

It should be noted that in processes 401 to 405, the first object is performing live streaming but the first object is not performing joint live streaming. In some embodiments, in the case that the first object is performing live streaming and not performing joint live streaming, the first terminal displays the at least one candidate object and the joint collaboration information of the at least one candidate object in response to the trigger operation on the target portal.

In some embodiments, the first terminal determines whether the first object is performing live streaming and not performing joint live streaming in response to the trigger operation on the target portal. In the case that the first object is performing live streaming and not performing joint live streaming, the first terminal displays the at least one candidate object and the joint collaboration information of the at least one candidate object. In the case that the first object is not performing live streaming or the first object is performing joint live streaming, the first terminal does not display the at least one candidate object and the joint collaboration information of the at least one candidate object. In some embodiments, the first terminal sends the object acquisition request to the server in response to the trigger operation on the target portal. The server receives the object acquisition request and determines whether the first object is performing live streaming and not performing joint live streaming based on live streaming status information of the first object carried in the object acquisition request. In the case that the first object is performing live streaming and not performing joint live streaming, the server acquires the at least one candidate object and the joint collaboration information of the at least one candidate object to trigger the display of the at least one candidate object and the joint collaboration information of the at least one candidate object by the first terminal. In the case that the first object is not performing live streaming or the first object is performing joint live streaming, the server does not acquire the at least one candidate object and the joint collaboration information of the at least one candidate object.

In 406, the first terminal sends a joint live streaming request to the server in response to a select operation on a second object among the at least one candidate object, wherein the joint live streaming request is used to request joint live streaming with the second object, the joint live streaming being performed to display the item information of the target item of the first object in a virtual space of the second object.

In the embodiments of the present disclosure, the second object is a selected object among the at least one candidate object. The second object is a second anchor account. The second anchor account is an anchor account of any type, such as an anchor account of the game type, the celebrity type or the e-commerce type.

In some embodiments, the first terminal acquires an item identifier of the target item of the first object in response to the select operation on the second object among the at least one candidate object, and sends the joint live streaming request carrying the item identifier of the target item, such that the target item can be displayed in the virtual space of the second object subsequently. The target item refers to an item to be displayed in the virtual space of the second object. In some embodiments, there may be one or more target items. The target item is an item associated with the virtual space of the first object. For example, the target item includes at least one of: an item to be traded in the virtual space of the first object or a predetermined item of the first object, which is not limited in the embodiments of the present disclosure.

In some embodiments, the first terminal displays an item selection page in response to the select operation on the second object among the at least one candidate object. The item selection page includes at least one item associated with the virtual space of the first object. The first terminal displays a request page of the second object in response to a select operation on the target item among the at least one item. The request page includes a request initiate control. The first terminal sends the joint live streaming request to the server in response to a trigger operation on the request initiate control.

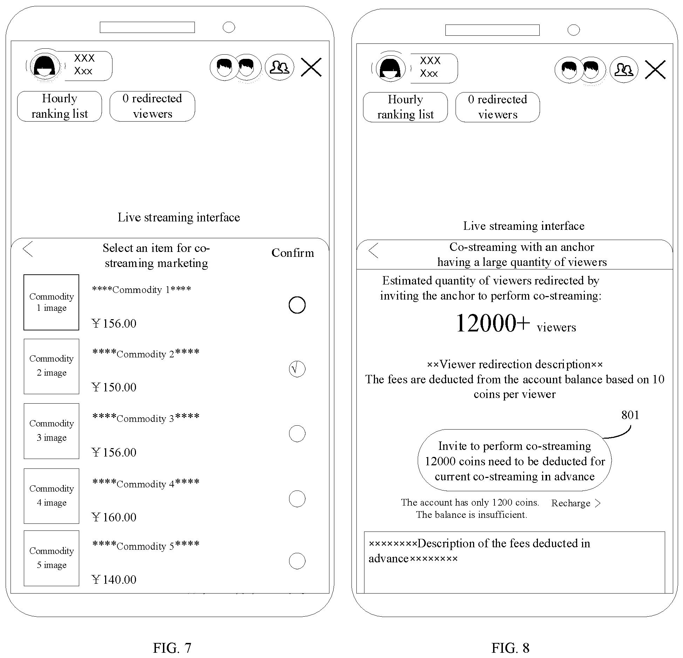

For example, FIG. 7 is a schematic diagram of an item selection page displayed in a first terminal according to some embodiments of the present disclosure. Referring to FIG. 7, at least one item is displayed on the item selection page. The items include a commodity 1, a commodity 2, ..., and a commodity 5. In some embodiments, the first terminal displays at least one of: a title, a price, a number and an image of the at least one item on the item selection page. Referring to FIG. 7, a title, a price, a number and an image of each commodity are displayed on the item selection page.

For example, FIG. 8 is a schematic diagram of a request page of the second object displayed in the first terminal according to some embodiments of the present disclosure. Referring to FIG. 8, on the request page, the request initiate control may be an "Invite to perform co-streaming" control 801. In some embodiments, the first terminal displays, on the request page of the second object, an estimated quantity of redirected viewers when the second object performs the joint live streaming. Referring to FIG. 8, on the request page, the estimated quantity of redirected viewers may be the "estimated quantity of viewers redirected by inviting the anchor to perform co-streaming: 12000+ viewers". In some embodiments, the first terminal displays, on the request page of the second object, a quantity of virtual resources required for the second object to perform the joint live streaming. Referring to the example illustrated in FIG. 8, on the request page, the quantity of virtual resources may be the " 12000 coins need to be deducted for current co-streaming in advance" which is shown in the request initiate control in the illustrated example.

In 407, the server receives the joint live streaming request and sends the joint live streaming request to a second terminal.

In the embodiments of the present disclosure, the second terminal is a terminal corresponding to the second object, that is, a terminal on which the second anchor account logs.

In some embodiments, the server acquires object information of the second object from the joint live streaming request in response to receiving the joint live streaming request initiated by the first object, and sends the joint live streaming request to the second object based on the object information of the second object. The object information of the second object is an object identifier of the second object. For example, the object identifier may be the second anchor account or an ID of a live streaming room of the second anchor account. By carrying the object information of the second object in the joint live streaming request, the joint live streaming request can be sent based on the object information of the second object, thereby ensuring reliability of information transmission.

In 408, the second terminal receives the joint live streaming request of the first object for the second object, and displays the first object and at least one process control for the first object in a virtual space of the second object, wherein the at least one process control is used to respond to the joint live streaming request of the first object.

In some embodiments, in a case that one object initiates a joint live streaming request to the second object, the second terminal displays the first object in a form of a pop-up prompt and displays the at least one process control for the first object in the virtual space of the second object.

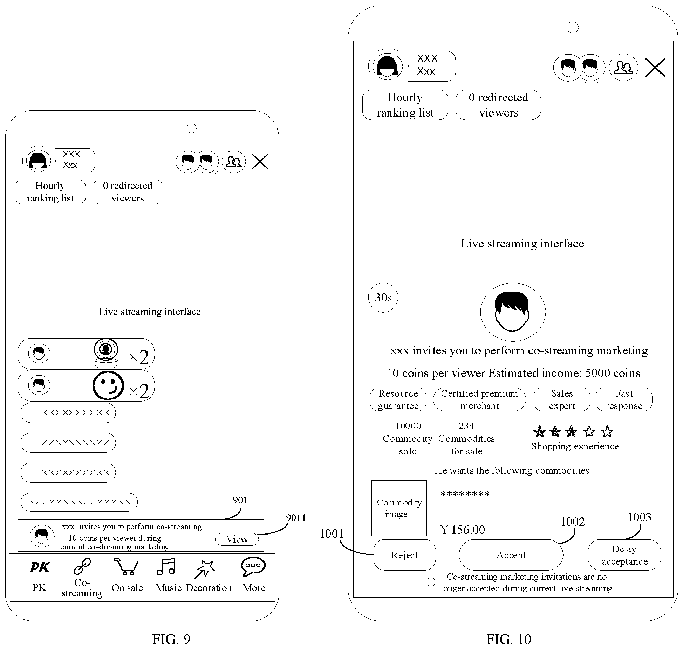

For example, FIG. 9 is a schematic diagram of a live streaming interface of the second object, which is displayed in the second terminal according to some embodiments of the present disclosure. The illustrated live streaming interface of the second object is displayed in the second terminal. Referring to FIG. 9, in the live streaming interface of the second object, a request pop-up window 901 of the first object is displayed. The first object and a view control for the first object are displayed in the request pop-up window 901. The at least one process control for the first object is displayed in response to a trigger operation on the view control. Referring to FIG. 9, in the live streaming interface, the view control may be the "View" control 9011 shown in the pop-up window 901. The second terminal displays a live streaming interface shown in FIG. 10 in response to the trigger operation on the "View" control 9011. FIG. 10 is a schematic diagram of another live streaming interface of the second object according to some embodiments of the present disclosure and is display in the second terminal. Referring to FIG. 10, a plurality of process controls are displayed in the live streaming interface. The at least one process control may be a "Reject" control 1001, an "Accept" control 1002, and a "Delay acceptance" control 1003 shown in FIG. 10. It should be noted that the displayed process controls including the foregoing three types of controls are illustrated as examples of the embodiments of the present disclosure. In some embodiments, the at least one process control may include only the "Reject" control and the "Accept" control, or include other functional controls for processing the joint live streaming request of the first object, which is not limited in the embodiments of the present disclosure.

In some embodiments, in the case that two or more first objects initiate joint live streaming requests to the second object, the second terminal displays a first object list including the first object and at least one process control for each first object in the virtual space of the second object.

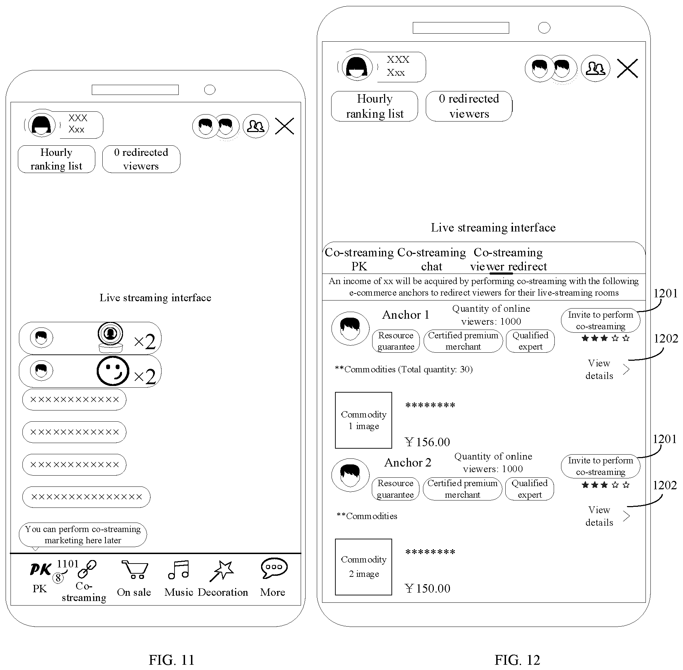

In some embodiments, in the case that two or more first objects initiate the joint live streaming requests to the second object, the second terminal displays, in the virtual space of the second object, a quantity of the first objects initiating the joint live streaming requests. In some embodiments, in the case that two or more first objects initiate the joint live streaming requests to the second object, the second terminal displays, in a region in which a target portal of the virtual space of the second object is located, the quantity of the first objects initiating the joint live streaming requests. In some embodiments, in the case that two or more first objects initiate the joint live streaming requests to the second object, the second terminal displays, in a bubble form in the virtual space of the second object, the quantity of the first objects initiating the joint live streaming requests. In some embodiments, in the case that two or more first objects initiating the joint live streaming requests to the second object, the second terminal displays, in the bubble form in the region in which the target portal of the virtual space of the second object is located, the quantity of the first objects initiating the joint live streaming requests. For example, FIG. 11 is a schematic diagram of a live streaming interface of the second object according to some embodiments of the present disclosure. Referring to FIG. 11, a bubble prompt 1101 is displayed in a region in which the "PK" portal is located in the live streaming interface. The bubble prompt 1101 includes the quantity of the first objects initiating the joint live streaming requests, which is "8" shown in FIG. 11. That is, eight first objects initiate the joint live streaming request. In some embodiments, the second terminal displays request prompt information in the bubble form in the region in which the target portal of the virtual space of the second object is located. The request prompt information is used to prompt trigger of the target portal to view the first objects initiating the joint live streaming requests to the second object. For example, referring to FIG. 11, content of the request prompt information may be "You can perform co-streaming marketing here later". It should be noted that the foregoing display manners can be modified based on design requirements, and specific forms are not limited in the embodiments of the present disclosure.

In some embodiments, the second terminal may display the first object list in the virtual space of the second object in response to the trigger operation on the target portal of the virtual space of the second object. For example, the second terminal displays a live streaming interface shown in FIG. 12 in response to a trigger operation on the "PK" portal shown in FIG. 11. FIG. 12 is a schematic diagram of another live streaming interface of the second object according to some embodiments of the present disclosure. Referring to FIG. 12, in the live streaming interface, a plurality of first objects and one process control for each of the first objects are displayed. In the illustrated example, two first objects, "Anchor 1" and "Anchor 2" are listed. The process control may be an accept control. The accept control may be the "Invite to perform co-streaming" control 1201 shown in FIG. 12.

In some embodiments, the process of displaying the first object by the second terminal includes: displaying, by the second terminal, an object avatar or an object name of the first object in the virtual space of the second object. For example, referring to FIG. 10 or FIG. 12, the object avatar and the object name of the first object are displayed in the virtual space of the second object.

In some embodiments, the second terminal further displays joint live streaming prompt information of the first object in the virtual space of the second object. The joint live streaming prompt information is used to prompt that the first object requests joint live streaming with the second object. For example, content of the joint live streaming prompt information may be "xxxx invites you to perform co-streaming marketing to help xxxx redirect viewers with 10 coins per viewer." In some embodiments, the second terminal further displays an estimated quantity of virtual resources obtained for performing the joint live streaming in the virtual space of the second object. For example, content of the estimated quantity of virtual resources may be the "estimated income: 50000 coins."

In the foregoing embodiments, the second terminal may further display association information of the first object. The process is as follows.

In some embodiments, the joint live streaming request carries basic item information of the target item of the first object. The basic item information is used to provide a reference for the selection of the second object. That is, the basic item information is used to provide a reference for the second object in selecting an item. The second terminal further displays the basic item information of the target item of the first object in the virtual space of the second object. The basic item information includes at least one of: an item title, an item price, an item number and an item image. In some embodiments, referring to FIG. 10, the basic item information of the target item of the first object is displayed in an information panel of the first object in the virtual space of the second object. Referring to FIG. 12, the basic item information of the target item of the first object, such as a commodity title, a commodity price, a commodity number and a commodity image, is displayed in the first object list of the virtual space of the second object.

In some embodiments, the joint live streaming request carries store information associated with the first object. The second terminal further displays the store information associated with the first object in the virtual space of the second object. The store information includes at least one of tradable items in a store, a label of the store, a score of the store and sales information of the store. The tradable items in the store are items on sale in the store. In some embodiments, the second terminal displays a quantity of the tradable items in the store of the first object in the virtual space of the second object. For example, referring to FIG. 10, the quantity of the tradable items may be "commodities for sale: 234" shown in FIG. 10. The label of the store is a rating label of the store. For example, referring to FIG. 10 or FIG. 12, the label of the store is "sales expert" shown in FIG. 10 or "certified premium merchant" shown in FIG. 12. The score of the store is determined based on scores provided by accounts purchasing items in the store. For example, referring to FIG. 10 or FIG. 12, the score of the store is the "shopping experience" represented by stars shown in FIG. 10 or stars for the corresponding store shown in FIG. 12. The sales information of the store is a total sales quantity, a monthly sales quantity or an annual sales quantity of the store, such as 3000 per month. For example, referring to FIG. 10, the sales information of the store is "Commodity sold: 10000".

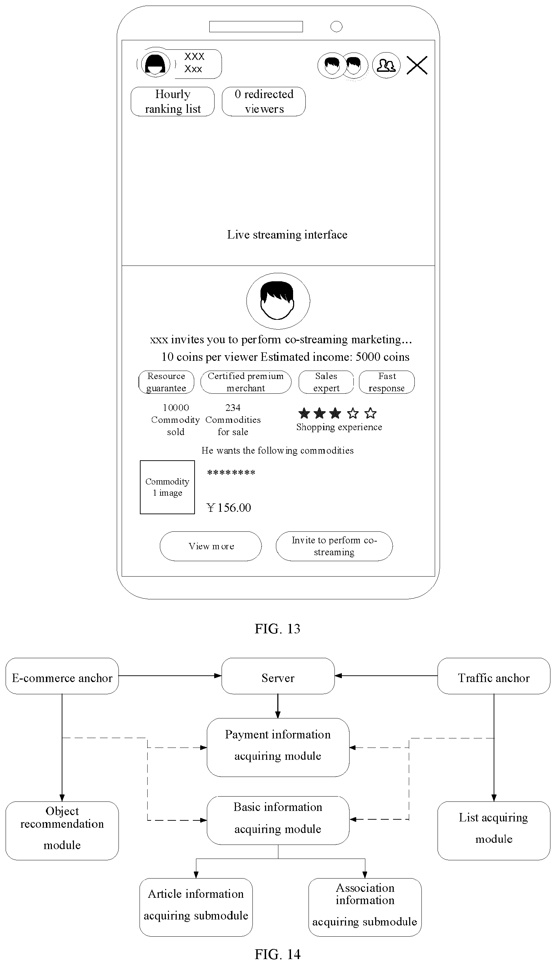

In some embodiments, for the embodiment described above, the second terminal may further display, in the virtual space of the second object, a details view control for the at least one first object, and display a details page of any one of the first objects in response to a trigger operation on the details view control for the first object. The details page of the first object includes detailed information of the first object. For example, referring to FIG. 12, the details view control may be a "View details" control 1202 shown in FIG. 12. The second terminal displays the details page of the first object shown in FIG. 13 in response to a trigger operation on the "View details" control 1202. FIG. 13 is a schematic diagram of the details page of the first object according to some embodiments of the present disclosure. Referring to FIG. 13, the basic item information of the target item of the first object and the store information associated with the first object are displayed on the details page of the first object shown in FIG. 13.

In the embodiments of the present disclosure, the amount of information displayed in the virtual space of the second object is increased, such that the user of the second object can know the item information and the store information of the first object in time. It should be noted that the associated information of the first object displayed in the virtual space of the second object in 408 is visible only to the second object.

In 409, the second terminal sends a prompt message indicating an acceptance of the joint live streaming request to the server in response to a trigger operation on an accept control among the at least one process control.

In some embodiments, the second terminal performs the joint live streaming with the first object in response to the trigger operation on the accept control among the at least one process control.

The 409 is the process of accepting the joint live streaming request by the second object. In the case that the second object rejects the joint live streaming request, there may be other implementations. Corresponding content is as follows.

In some embodiments, the second terminal returns a rejection message to the first object in response to a trigger operation on a reject control among the at least one process control. The rejection message is used to indicate that the second object refuses to perform the joint live streaming. The first terminal receives and displays the rejection message from the second object. For example, content of the rejection message may be "The anchor rejects your invitation."

In some embodiments, after the second terminal returns the rejection message to the first object, the first object is not displayed in a case that the joint live streaming request of the first object is received again within a target duration. The target duration is a predetermined duration, such as 10 hours or 1 day. By not displaying the first object for the second object within a period of time, the second object is not disturbed, such that the second object does not need to repeatedly reject requests of the first object, thereby improving the human-machine interaction efficiency.

In some embodiments, the second terminal returns a delayed acceptance message to the first object in response to a trigger operation on a delayed accept control among the at least one process control. The delayed acceptance message is used to indicate that the second object currently cannot perform the joint live streaming and will accept the joint live streaming request later. The first terminal receives and displays the delayed acceptance message from the second object. For example, content of the delayed acceptance message may be "The anchor will accept your invitation later." By providing a delayed acceptance option, flexibility of joint data processing is improved.

In 410, the server acquires the item information of the target item in response to the acceptance of the joint live streaming request by the second object.

In some embodiments, the server acquires the item information of the target item from an item information database based on the item identifier of the target item carried in the joint live streaming request, wherein item identifiers and item information of a plurality of items are stored in the item information database.

The item identifier may be an item name, an item number or an item ID.

In the foregoing embodiments, by carrying the item identifier of the target item in the joint live streaming request, the item information of the target item can be subsequently acquired based on the item identifier. Then, the item information of the target item can be displayed in the virtual space of the second object.

In 411, the server associates the item information of the target item with the virtual space of the second object.

In some embodiments, the virtual space is represented by an identifier of the virtual space, such as a live streaming room ID. In some embodiments, the server binds the item information of the target item to the identifier of the virtual space of the second object. In the embodiments of the present disclosure, by associating the item information of the target item with the virtual space of the second object, in a case that a viewer subsequently trades an item in the virtual space of the second object, it can be quickly learned that the item traded by the viewer is the target item of the first object, such that the subsequent trading process of the target item can proceed smoothly.

In 412, the server sends the item information of the target item to the second terminal.

In 413, the second terminal receives the item information of the target item and displays the item information of the target item in the virtual space of the second object.

In some embodiments, the item information of the target item includes the basic item information of the target item, such as at least one of the item title, the item price, the item number and the item image as mentioned in 408. In some embodiments, the item information further includes item trading information of the target item, such as a trading control and the store information. In some embodiments, the second terminal displays the basic item information and the item trading information of the target item in the virtual space of the second object. The process of displaying the item information of the target item is described below based on following content.

In some embodiments, the item information of the target item includes the trading control corresponding to the target item. The second terminal displays the trading control corresponding to the target item in the virtual space of the second object, wherein the trading control is used to trade the target item in the virtual space of the second object.

In some embodiments, the trading control may be associated with a trading link of the target item. Item trading can be performed based on the associated trading link by triggering the trading control. For example, the trading control may be a "Purchase" control. In the case that the viewer in the virtual space of the second object wants to purchase the target item displayed in the virtual space, the viewer triggers the trading control corresponding to the target item to trigger execution of a trading processing of the target item by the corresponding terminal. For example, the terminal is triggered to display a payment page of the target item in response to the trading control corresponding to the target item being tapped.

In the embodiments of the present disclosure, by displaying the trading control of the target item in the virtual space of the second object, the viewer in the virtual space of the second object can trade the target item of the first object in the virtual space of the second object through the trading control without exiting the virtual space of the second object, thereby improving human-machine interaction efficiency.

In some embodiments, the item information of the target item includes store information of a store to which the target item belongs. The second terminal displays the store information of the store to which the target item belongs in the virtual space of the second object.

The store information includes at least one of: the store label, store score, store level, and store sales information. In the embodiments of the present disclosure, by displaying the store information of the store to which the target item belongs in the virtual space of the second object, the amount of information displayed in the virtual space of the second object is increased, such that the viewer in the virtual space of the second object can learn a larger amount of information, thereby improving live streaming experience of the user.

In some embodiments, the item information of the target item includes a first access portal of the store to which the target item belongs. The second terminal displays the first access portal in the virtual space of the second object, wherein the first access portal is used to trigger an access to the store.

For example, the first access portal may be a "store view" portal. In the case that the viewer in the virtual space of the second object wants to view the store to which the target item belongs, the viewer triggers the first access portal to trigger display of a corresponding store details page by the corresponding terminal.

In the embodiments of the present disclosure, by displaying the first access portal in the virtual space of the second object, the amount of information displayed in the virtual space of the second object is increased, such that the viewer in the virtual space of the second object can quickly go to the page of the store through the first access portal, thereby improving the live streaming experience of the user.

In some embodiments, the item information of the target item includes a second access portal of the virtual space of the first object. Correspondingly, the second access portal is displayed in the virtual space of the second object, wherein the second access portal is configured to cause an access to the virtual space of the first object to be triggered.

For example, the second access portal may be a "live streaming room" portal. In the case that the viewer in the virtual space of the second object wants to go to the virtual space in which the target item is located, the viewer can trigger the second access portal to cause the corresponding terminal trigger an access to the virtual space of the first object, that is, an access to the virtual space in which the target item is located.

In the embodiments of the present disclosure, by displaying the second access portal in the virtual space of the second object, the amount of information displayed in the virtual space of the second object is increased, such that the viewer in the virtual space of the second object can quickly go to the virtual space of the first object through the second access portal to perform the subsequent item trading process, thereby improving the live streaming experience of the user. The second terminal may display the item information of the target item in a list form.

In some embodiments, an item list page is provided in the virtual space of the second object. The second terminal displays the item information of the target item of the first object in the item list page of the second object.

In some embodiments, a trigger portal of the item list page is provided in the virtual space of the second object. The trigger portal is used to trigger display of the item list page. For example, the trigger portal of the item list page may be a "shopping cart" control.

In some embodiments, in the case that an item is associated with the virtual space of the second object, the second terminal displays the item information of the target item in a first item list of the virtual space of the second object and displays item information of an item of the second object in a second item list of the virtual space of the second object.

The first item list is used to display the item information of the target item of the first object, and the second item list is used to display the item information of the item of the second object. In the embodiments of the present disclosure, by setting the first item list and the second item list in the virtual space of the second object and displaying the target item of the first object and the item of the second object in different item lists, the user can intuitively distinguish the target item of the first object and the item of the second object, thereby improving an item display effect.

In some embodiments, a view portal of the first item list and a view portal of the second item list are provided in the virtual space of the second object. In the case that the viewer in the virtual space of the second object wants to view the target item of the first object, the viewer triggers the view portal of the first item list. The terminal corresponding to the viewer displays the first item list in the virtual space of the second object, and displays the item information of the target item in the first item list. Alternatively, in the case that the viewer in the virtual space of the second object wants to view the item of the second object, the viewer triggers the view portal of the second item list. The terminal corresponding to the viewer displays the second item list in the virtual space of the second object, and displays the item information of the item of the second object in the second item list.

In some embodiments, the first item list may be a first region of the item list page, and the second item list may be a second region of the item list page. For example, the first item list is an upper region of the item list page and the second item list is a lower region of the item list page. Or the first item list is the lower region of the item list page and the second item list is the upper region of the item list page. In some embodiments, the regions in which the first item list and the second item list are located may be determined in other manners. For example, the first item list is located in a left region and the second item list is located in a right region, which is not limited in the embodiments of the present disclosure.

It should be noted that the foregoing merely takes the display manner of the first item list and the second item list as an example to describe the solution. In some embodiments, the item information of the target item and the item information of the item of the second object may be displayed in other manners. For example, the item information of the target item is displayed by sliding to the left in the virtual space of the second object, and the item information of the item of the second object is displayed by sliding to the right in the virtual space of the second object.

In some embodiments, the second terminal displays the item information of the target item in the virtual space of the second object in response to live streaming time of the second object reaching target time. The target time is time at which a live streaming introduction to the target item starts. The target time is predetermined live streaming time, such as 2022.11.16. In this way, in the case that the live streaming time reaches the target time, the item information of the target item is automatically displayed, thereby improving item display flexibility.

In some embodiments, prior to displaying the item information of the target item, the second terminal further displays a live streaming announcement of the target item, wherein the live streaming announcement is configured to prompt an upcoming live streaming introduction to the item information of the target item. In some embodiments, the second terminal displays the live streaming announcement in the virtual space of the second object. In some embodiments, the second terminal further displays the live streaming announcement on an associated page of the virtual space of the second object. For example, the associated page may be a personal homepage of the second object, a store page of the second object, or the like. In the embodiments of the present disclosure, by displaying the live streaming announcement of the target item, the amount of information displayed is increased, such that the user is prompted, thereby improving the live streaming experience of the user.

In 414, the server generates an electronic receipt of the target item based on the item information of the target item and the object information of the second object in response to trading of the target item in the virtual space of the second object by any viewer in the virtual space of the second object.

In some embodiments, trading of the target item refers to performing an item trading action on the target item. The item trading action refers to placing an order or paying for the target item. The electronic receipt is an electronic order. In some embodiments, the server may generate the electronic receipt of the target item by adding the item information of the target item in an item information field in the electronic receipt of the target item and adding the object information of the second object in an object information field in the electronic receipt of the target item in response to the trading of the target item in the virtual space of the second object by the any viewer in the virtual space of the second object.

In the embodiments of the present disclosure, the electronic receipt of the target item is generated by using the object information of the second object, such that it can be subsequently quickly learned based on the electronic receipt that the generation of the electronic receipt is triggered in the virtual space of the second object. In this way, the subsequent trading process of the target item can proceed smoothly.

In 415, the server sends a target virtual resource to the second object based on the object information of the second object carried in the electronic receipt of the target item, wherein the target virtual resource is a virtual resource required for the second object to perform the joint live streaming.

The virtual resource required for the second object to perform the joint live streaming is virtual resource that need to be paid to the second object when the first object requests the second object to perform the joint live streaming. That is, the virtual resource required for the second object to perform the joint live streaming is virtual resource that the second object can obtain by performing the joint live streaming.

In the embodiments of the present disclosure, the second object corresponding to the electronic receipt can be quickly determined based on the electronic receipt of the target item. Then the target virtual resource can be sent to the second object based on the object information of the second object carried in the electronic receipt, thereby improving efficiency of sending the target virtual resource.

In some embodiments, the target virtual resource is determined based on a quantity of viewers in the virtual space of the second object who perform item trading actions in the virtual space of the second object; or the target virtual resource is determined based on item trading actions performed in the virtual space of the second object by the viewers in the virtual space of the second object.

For example, in the case that 100 viewers in the virtual space of the second object perform item trading actions in the virtual space of the second object, the virtual resource acquired by the second object is 1000 coins through calculation based on the predetermined unit price of "10 coins per viewer" and the viewer quantity of 100.

For example, in the case that an order income of 1000 coins is generated through item trading actions performed in the virtual space of the second object by the viewers in the virtual space of the second object, the virtual resource acquired by the second object is 100 coins through calculation based on the predetermined proportion of 10% and the order income of 1000 coins.

In the foregoing embodiment, the process of determining the target virtual resource is illustrated by taking the viewers in the virtual space of the second object performing item trading actions in the virtual space of the second object as an example. In some other embodiments, the viewers in the virtual space of the second object can further perform item trading actions in the virtual space of the first object. In this case, there may be the following three ways of determining the target virtual resource.

In some embodiments, the virtual resource is determined based on a quantity of viewers in the virtual space of the second object who go to the virtual space of the first object. For example, in the case that 100 viewers in the virtual space of the second object go to the virtual space of the first object, the virtual resource acquired by the second object is 1000 coins through calculation based on the predetermined unit price of "10 coins per viewer" and the viewer quantity of 100.

In some embodiments, the virtual resource is determined based on a quantity of viewers in the virtual space of the second object who perform item trading actions in the virtual space of the first object. For example, in the case that 100 viewers in the virtual space of the second object perform item trading actions in the virtual space of the first object, the virtual resource acquired by the second object is 1000 coins through calculation based on the predetermined unit price of "10 coins per viewer" and 100 viewers has performed item trading actions.

In some embodiments, the virtual resource is determined based on item trading actions performed in the virtual space of the first object by the viewers in the virtual space of the second object. For example, in the case that an order income of 1000 coins is generated through item trading actions performed in the virtual space of the first object by the viewers in the virtual space of the second object, the virtual resource acquired by the second object is 100 coins through calculation based on the predetermined proportion of 10% and the order income of 1000 coins.

In the embodiments of the present disclosure, a plurality of ways of determining the target virtual resource are provided, thereby improving flexibility of determining the target virtual resource.

FIG. 14 is a schematic diagram of modules for processing live streaming according to some embodiments of the present disclosure. Referring to FIG. 14, an e-commerce anchor (the first object) sends an invitation signaling (the joint live streaming request) to a traffic anchor (the second object) through a server to request joint live streaming with the second object. The server is associated with an object recommendation module, a basic information acquiring module, a payment information acquiring module and a list acquiring module. The object recommendation module is configured to recommend at least one candidate object for the first object. The list acquiring module is configured to acquire relevant information of the object initiating the joint live streaming with the second object. The basic information acquiring module includes an item information acquiring submodule and an association information acquiring submodule. The item information acquiring submodule is configured to acquire item information of a target item of the first object. The association information acquiring submodule is configured to acquire other information associated with the target item. The payment information acquiring module is configured to acquire the target virtual resource allocated to the second object.

In the technical solution provided in the embodiments of the present disclosure, in the case that the first object requests to perform the joint live streaming with the second object, by acquiring the item information of the target item of the first object during the current joint live streaming and displaying the item information of the target item in the virtual space of the second object, a viewer in the virtual space of the second object can trade the target item of the first object in the virtual space of the second object without exiting the virtual space of the second object. In this way an operation path of item trading is simplified and human-machine interaction efficiency is improved, such that more viewers can be attracted to purchase the target item of the first object.

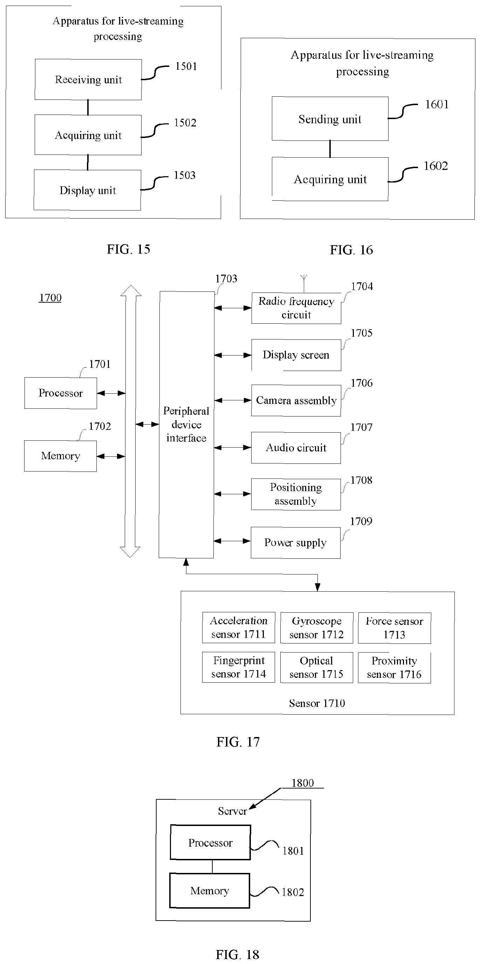

FIG. 15 is a block diagram of an apparatus for processing live streaming according to some embodiments of the present disclosure. Referring to FIG. 15, the apparatus includes a receiving unit 1501, an acquiring unit 1502 and a display unit 1503.

The receiving unit 1501 is configured to receive a joint live streaming request initiated by a first object, wherein the joint live streaming request is used to request joint live streaming with a second object, the joint live streaming being performed to display, in a virtual space of the second object, item information of a target item of the first object. In some embodiments, the first object is a first anchor account, and the second object is a second anchor account.

The acquiring unit 1502 is configured to acquire the item information of the target item in response to an acceptance of the joint live streaming request by the second object.

The display unit 1503 is configured to display the item information of the target item in the virtual space of the second object.

In the technical solution provided in the embodiments of the present disclosure, in the case that the first object requests to perform the joint live streaming with the second object, by acquiring the item information of the target item of the first object during the current joint live streaming and displaying the item information of the target item in the virtual space of the second object, a viewer in the virtual space of the second object can trade the target item of the first object in the virtual space of the second object without exiting the virtual space of the second object. In this way, an operation path of item trading is simplified and human-machine interaction efficiency is improved, such that more viewers can be attracted to purchase the target item of the first object.

In some embodiments, the item information of the target item includes a trading control corresponding to the target item. The display unit 1503 is configured to: display the trading control corresponding to the target item in the virtual space of the second object, wherein the trading control is used to trade the target item in the virtual space of the second object.

In some embodiments, the item information of the target item includes store information of a store to which the target item belongs. The display unit 1503 is configured to: display the store information in the virtual space of the second object.

In some embodiments, the item information of the target item includes a first access portal of the store to which the target item belongs. The display unit 1503 is configured to: display the first access portal in the virtual space of the second object, wherein the first access portal is used to trigger an access to the store.

In some embodiments, the item information of the target item includes a second access portal of a virtual space of the first object. The display unit 1503 is configured to: display the second access portal in the virtual space of the second object, wherein the second access portal is configured to cause an access to the virtual space of the first object to be triggered.

In some embodiments, the display unit 1503 is configured to: display the item information of the target item in a first item list of the virtual space of the second object. The display unit 1503 is further configured to: display item information of an item of the second object in a second item list of the virtual space of the second object.

In some embodiments, the display unit 1503 is configured to: display the item information of the target item in the virtual space of the second object in response to live streaming time of the second object reaching target time.

In some embodiments, the display unit 1503 is further configured to: display a live streaming announcement of the target item, wherein the live streaming announcement is configured to prompt an upcoming live streaming introduction to the item information of the target item.

FIG. 16 is a block diagram of an apparatus for processing live streaming according to some embodiments. Referring to FIG. 16, the apparatus includes a sending unit 1601 and an acquiring unit 1602.

The sending unit 1601 is configured to, in response to receiving a joint live streaming request initiated by a first object, send the joint live streaming request to a second object, wherein the joint live streaming request is used to request joint live streaming with the second object, the joint live streaming being performed to display, in a virtual space of the second object, item information of a target item of the first object.

The acquiring unit 1602 is configured to acquire the item information of the target item in response to an acceptance of the joint live streaming request by the second object.

The sending unit 1601 is further configured to send the item information of the target item to the second object, wherein the item information is used to trigger display of the item information of the target item in the virtual space of the second object.

In the technical solution provided in the embodiments of the present disclosure, in the case that the first object requests to perform the joint live streaming with the second object, by acquiring the item information of the target item of the first object during the current joint live streaming and displaying the item information of the target item in the virtual space of the second object, a viewer in the virtual space of the second object can trade the target item of the first object in the virtual space of the second object without exiting the virtual space of the second object. In this way, human-machine interaction efficiency is improved, such that more viewers can be attracted to purchase the target item of the first object.

In some embodiments, the sending unit 1601 is configured to: acquire object information of the second object from the joint live streaming request in response to receiving the joint live streaming request initiated by the first object; and send the joint live streaming request to the second object based on the object information of the second object.

In some embodiments, the acquiring unit 1602 is configured to: acquire the item information of the target item from an item information database based on an item identifier of the target item carried in the joint live streaming request, wherein item identifiers and item information of a plurality of items are stored in the item information database.

In some embodiments, the apparatus further includes: an associating unit, configured to associate the item information of the target item with the virtual space of the second object.

In some embodiments, the apparatus further includes: a generating unit, configured to generate an electronic receipt of the target item based on the item information of the target item and the object information of the second object in response to trading of the target item in the virtual space of the second object by any viewer in the virtual space of the second object.

In some embodiments, the sending unit 1601 is further configured to: send a target virtual resource to the second object based on the object information of the second object carried in the electronic receipt of the target item, wherein the target virtual resource is a virtual resource required for the second object to perform the joint live streaming.

In some embodiments, the target virtual resource is determined based on a quantity of viewers in the virtual space of the second object who perform item trading actions in the virtual space of the second object.

In some embodiments, the target virtual resource is determined based on item trading actions performed in the virtual space of the second object by the viewers in the virtual space of the second object.

In some embodiments, the acquiring unit 1602 is further configured to: acquire at least one candidate object and joint collaboration information of the at least one candidate object in response to receiving an object acquisition request of the first object, wherein the joint collaboration information is used to provide a reference for the first object in selecting the candidate object.

In some embodiments, the acquiring unit 1602 is configured to perform at least one of:
acquiring, based on an item type of the target item of the first object, at least one candidate object matching the item type and joint collaboration information of the at least one candidate object;
acquiring, based on a history joint live streaming situation of the first object, at least one candidate object matching the history joint live streaming situation and joint collaboration information of the at least one candidate object; and
acquiring, based on a level of the virtual space of the first object, at least one candidate object matching the level and joint collaboration information of the at least one candidate object.

It should be noted that when the apparatus for processing live streaming provided in the foregoing embodiments performs processing live streaming, the apparatus is only illustrated by function modules. In practice, the foregoing functions can be allocated to and realized by different function modules as required. That is, the internal structure of the apparatus can be divided into different function modules to realize all or part of the functions. In addition, the apparatus for processing live streaming in the foregoing embodiments has the same concept as the embodiments of the method for processing live streaming. Specific implementation process in the apparatus embodiments can be referred to the method embodiments, which will not be repeated here.

A computer device in the embodiments of the present disclosure may be provided as a terminal. FIG. 17 is a block diagram of structure of a terminal 1700 according to some embodiments of the present disclosure. The terminal 1700 may be a smartphone, a tablet computer, a Moving Picture Experts Group Audio Layer III (MP3) player, a Moving Picture Experts Group Audio Layer IV (MP4) player, a notebook computer or a desktop computer. The terminal 1700 may also be referred to as a user equipment, a portable terminal, a laptop terminal, a desktop terminal, or the like.

Generally, the terminal 1700 includes a processor 1701 and a memory 1702.

The processor 1701 may include one or more processing cores, such as a quad-core processor or an eight-core processor. The processor 1701 may be implemented in at least one hardware form of a digital signal processing (DSP), a field-programmable gate array (FPGA), and a programmable logic array (PLA). The processor 1701 may alternatively include a main processor and a coprocessor. The main processor is configured to process data in an awake state, and is also referred to as a central processing unit (CPU). The coprocessor is a low-power-consumption processor configured to process data in a standby state. In some embodiments, the processor 1701 may be integrated with a graphics processing unit (GPU). The GPU is configured to render and draw content that needs to be displayed on a display screen. In some embodiments, the processor 1701 may further include an artificial intelligence (AI) processor. The AI processor is configured to process computing operations related to machine learning.

The memory 1702 may include one or more computer-readable storage medium, which may be non-transient. The memory 1702 may further include a high-speed random-access memory (RAM) and a non-volatile memory, such as one or more magnetic disk storage devices and flash storage devices. In some embodiments, the non-transient computer-readable storage medium in the memory 1702 is configured to store at least one program code. The at least one program code is configured to be executed by the processor 1701 to perform the method for processing live streaming performed by the terminal in the method embodiments of the present disclosure.

In some embodiments, the terminal 1700 may further optionally include: a peripheral device interface 1703 and at least one peripheral device. The processor 1701, the memory 1702 and the peripheral device interface 1703 may be connected by a bus or a signal cable. Each peripheral device may be connected to the peripheral device interface 1703 by a bus, a signal cable or a circuit board. Specifically, the peripheral device includes at least one of: a radio frequency circuit 1704, a display screen 1705, a camera assembly 1706, an audio circuit 1707, a positioning assembly 1708 and a power supply 1709.

The peripheral device interface 1703 may be configured to connect at least one peripheral device related to input/output (I/O) to the processor 1701 and the memory 1702. In some embodiments, the processor 1701, the memory 1702 and the peripheral device interface 1703 may be integrated into a same chip or circuit board. In some other embodiments, any one or two of the processor 1701, the memory 1702 and the peripheral device interface 1703 may be implemented on a separate chip or circuit board, which is not limited in the embodiments of the present disclosure.

The radio frequency circuit 1704 is configured to receive and transmit a radio frequency (RF) signal, which is also referred to as an electromagnetic signal. The radio frequency circuit 1704 communicates with a communication network and other communication devices by using the electromagnetic signal. The radio frequency circuit 1704 may convert an electrical signal to an electromagnetic signal for transmission, or convert a received electromagnetic signal to an electrical signal. Optionally, the radio frequency circuit 1704 includes: an antenna system, a RF transceiver, one or more amplifiers, a tuner, an oscillator, a digital signal processor, a codec chip set, a user identity module card, and the like. The radio frequency circuit 1704 may communicate with other terminals through at least one wireless communication protocol. The wireless communication protocol includes, but is not limited to: a metropolitan area network, various generations of mobile communication networks (2G, 3G, 4G, and 5G), a wireless local area network, and/or a wireless fidelity (Wi-Fi) network. In some embodiments, the radio frequency circuit 1704 may further include a circuit related to near field communication (NFC), which is not limited in the present disclosure.

The display screen 1705 is configured to display a user interface (UI). The UI may include a graphic, a text, an icon, a video, and any combination thereof. In the case that the display screen 1705 is a touch display screen, the display screen 1705 is further capable of acquiring a touch signal on or above a surface of the display screen 1705. The touch signal may be input to the processor 1701 for processing as a control signal. In this case, the display screen 1705 may be further configured to provide a virtual button and/or a virtual keyboard, which is also referred to as a soft button and/or a soft keyboard. In some embodiments, the display screen 1705 is provided as one screen disposed on a front panel of the terminal 1700. In some other embodiments, the display screens 1705 are provided as at least two screens respectively disposed on different surfaces of the terminal 1700 or designed as folded. In some other embodiments, the display screen 1705 may be a flexible display screen disposed on a curved surface or a folded surface of the terminal 1700. The display screen 1705 may alternatively be provided in a non-rectangular irregular pattern, that is, an irregular-shaped screen. The display screen 1705 may be a liquid crystal display (LCD) screen, an organic light-emitting diode (OLED) screen, or the like.

The camera assembly 1706 is configured to acquire an image or a video. Optionally, the camera assembly 1706 includes a front-facing camera and a rear-facing camera. Generally, the front-facing camera is disposed on the front panel of the terminal, and the rear-facing camera is disposed on a rear surface of the terminal. In some embodiments, at least two rear-facing cameras are disposed, each of which is any one of a primary camera, a depth-of-field camera, a wide-angle camera and a telephoto camera, to realize the fusion of the primary camera and the depth-of-field camera for a background blurring function, the fusion of the primary camera and the wide-angle camera for a panoramic shooting function and a virtual reality (VR) shooting functions or other fusing shooting functions. In some embodiments, the camera assembly 1706 may further include a flashlight. The flashlight may be a monochromatic-temperature flashlight or a dichromatic-temperature flashlight. The dichromatic-temperature flashlight is a combination of a warm-light flashlight and a cold-light flashlight, and may serve to light compensation under different chromatic temperatures.

The audio circuit 1707 may include a microphone and a speaker. The microphone is configured to acquire sound waves of a user and an environment, convert the sound waves into electric signals, and input the electrical signals into the processor 1701 for processing, or input the electrical signals to the radio frequency circuit 1704 to enable voice communication. For the purpose of stereo sound acquisition or noise reduction, a plurality of microphones is provided and respectively disposed at different parts of the terminal 1700. The microphone may be an array microphone or an omnidirectional acquisition microphone. The speaker is configured to convert electrical signals from the processor 1701 or the radio frequency circuit 1704 into sound waves. The speaker may be a conventional thin-film speaker or a piezoelectric ceramic speaker. In the case that the speaker is the piezoelectric ceramic speaker, the speaker is capable of converting the electric signals into sound waves audible to human beings, and converting the electrical signals into sound waves inaudible to human beings for ranging and other purposes. In some embodiments, the audio circuit 1707 may further include a headphone jack.

The positioning assembly 1708 is configured to determine a current geographic location of the terminal 1700, to implement a navigation or a location based service (LBS). The positioning assembly 1708 may be the United States' Global Positioning System (GPS), China's BeiDou Navigation Satellite System, Russia's Global Navigation Satellite System (GLONASS), or the European Union's Galileo Satellite Navigation System.

The power supply 1709 is configured to supply power for various assemblies in the terminal 1700. The power supply 1709 may be an alternating current, direct current, a disposable battery, or a rechargeable battery. In the case that the power supply 1709 includes the rechargeable battery, the rechargeable battery may be charged in a wired mode or a wireless mode. The rechargeable battery may be further configured to support a fast-charging technology.

In some embodiments, the terminal 1700 may further include one or more sensors 1710. The one or more sensors 1710 include but are not limited to: an acceleration sensor 1711, a gyroscope sensor 1712, a force sensor 1713, a fingerprint sensor 1714, an optical sensor 1715, and a proximity sensor 1716.

The acceleration sensor 1711 may be configured to detect magnitudes of accelerations on three coordinate axes of a coordinate system established by the terminal 1700. For example, the acceleration sensor 1711 may be configured to detect components of gravitational acceleration on the three coordinate axes. The processor 1701 may control, based on a gravitational acceleration signal acquired by the acceleration sensor 1711, the display screen 1705 to display the user interface in a lateral view or a vertical view. The acceleration sensor 1711 may be further configured to acquire motion data of a game or a user.

The gyroscope sensor 1712 may be configured to detect a body direction and a rotational angle of the terminal 1700. The gyroscope sensor 1712 may acquire a 3D motion of a user on the terminal 1700 in cooperation with the acceleration sensor 1711. The processor 1701 may implement the following functions based on the data acquired by the gyroscope sensor 1712: motion sensing (such as changing the UI based on a tilt operation of the user), image stabilization during shooting, game control, and inertial navigation.

The force sensor 1713 may be disposed on a side frame of the terminal 1700 and/or a layer under the display screen 1705. In the case that the force sensor 1713 is disposed on the side frame of the terminal 1700, a user's holding signal to the terminal 1700 may be detected. The processor 1701 performs left/right hand recognition or a shortcut operation based on the holding signal acquired by the force sensor 1713. In the case that the force sensor 1713 is disposed on the layer under the display screen 1705, the processor 1701 controls an operable control on the UI based on a user's pressure operation on the display screen 1705. The operable control includes at least one of a button control, a scroll bar control, an icon control and a menu control.

The fingerprint sensor 1714 is configured to acquire a fingerprint of a user. An identity of the user is recognized by the processor 1701 based on the fingerprint acquired by the fingerprint sensor 1714, or the identity of the user is recognized by the fingerprint sensor 1714 based on the acquired fingerprint. In the case that the identity of the user is recognized as a trusted identity, the user is authorized by the processor 1701 to perform a related sensitive operation. The sensitive operation includes unlocking the screen, viewing encrypted information, downloading software, payment, changing settings, and the like. The fingerprint sensor 1714 may be disposed on a front surface, a rear surface or a side surface of the terminal 1700. In the case that a physical button or a its manufacturer's logo is disposed on the terminal 1700, the fingerprint sensor 1714 may be integrated with the physical button or the manufacturer's logo.

The optical sensor 1715 is configured to acquire intensity of ambient light. In an embodiment, the processor 1701 may control display brightness of the display screen 1705 based on the intensity of ambient light acquired by the optical sensor 1715. Specifically, in the case that the intensity of ambient light is relatively high, the display brightness of the display screen 1705 is increased. In the case that the intensity of ambient light is relatively low, the display brightness of the display screen 1705 is decreased. In another embodiment, the processor 1701 may further configured to dynamically adjust a imaging parameter of the camera assembly 1706 based on the intensity of ambient light acquired by the optical sensor 1715.

The proximity sensor 1716, also referred to as a distance sensor, is generally disposed on the front panel of the terminal 1700. The proximity sensor 1716 is configured to acquire a distance between a user and the front surface of the terminal 1700. In an embodiment, in the case that the distance between the user and the front surface of the terminal 1700 detected by the proximity sensor 1716 gradually decreases, the touch display screen 1705 is controlled by the processor 1701 to switch from a screen-on state to a screen-off state. In the case that the distance between the user and the front surface of the terminal 1700 detected by the proximity sensor 1716 gradually increases, the touch display screen 1705 is controlled by the processor 1701 to switch from the screen-off state to the screen-on state.

A person skilled in the art may understand that the structure shown in FIG. 17 does not constitute a limitation to the terminal 1700, and the terminal 1700 may include more or fewer components than those shown in the figure. Some components shown in the figure may be combined, or a different component configuration may be applied.

A computer device in the embodiments of the present disclosure may be provided as a server. FIG. 18 is a block diagram of a server according to some embodiments of the present disclosure. The server 1800 may vary greatly due to different configurations or performance and may include one or more CPUs 1801 and one or more memories 1802. The one or more memories 1802 are configured to store at least one program code therein. The one or more processors 1801, when loading and executing the at least one program code, are caused to perform the method for processing live streaming performed by the server in the foregoing method embodiments. The server 1800 may further include components such as a wired or wireless network interface, a keyboard, and an I/O interface for input and output. The server 1800 may further include other components for implementing device functions. Details are not described herein.

In some embodiments, a non-transitory computer-readable storage medium stored with at least one program code is further provided, such as the memory 1802 storing the at least one program code. The at least one program code, when loaded and executed by the processor 1801 of the server 1800, causes the server 1800 to perform the foregoing method for processing live streaming. Optionally, the non-transitory computer-readable storage medium may be a read-only memory (ROM), a RAM, a compact disc read-only memory (CD-ROM), a magnetic tape, a floppy disk, an optical data storage device, or the like.

In some embodiments, a computer program product including at least one computer program is further provided. The at least one computer program, when loaded and executed by a processor, causes the processor to perform the foregoing method for processing live streaming.

In some embodiments, the computer program in the embodiments of the present disclosure may be deployed to be executed on one computer device, on a plurality of computer devices at one site, or on a plurality of computer devices distributed at a plurality of sites and interconnected through a communications network. The plurality of computer devices distributed at the plurality of sites and interconnected through the communications network may form a block chain system.

All the embodiments of the present disclosure can be implemented independently or in combination with other embodiments, which are all regarded as falling within the protection scope of the present disclosure.

## Claims

1. A method for processing live streaming, performed by a terminal, comprising:
receiving (201) a joint live streaming request initiated by a first anchor account, wherein the joint live streaming request is used to request joint live streaming with a second anchor account logged into the terminal, the joint live streaming is performed to display, in a virtual space of the second anchor account, item information of a target item of the first anchor account;
acquiring (202) the item information of the target item in response to an acceptance of the joint live streaming request by the second anchor account; and
displaying (203) the item information of the target item in the virtual space of the second anchor account.

2. The method according to claim 1, wherein
the item information of the target item comprises a trading control corresponding to the target item; and
said displaying (203) the item information of the target item in the virtual space of the second anchor account comprises:
displaying the trading control corresponding to the target item in the virtual space of the second anchor account, wherein the trading control is used to trade the target item in the virtual space of the second anchor account.

3. The method according to claim 1 or 2, wherein
the item information of the target item comprises store information of a store to which the target item belongs; and
said displaying (203) the item information of the target item in the virtual space of the second anchor account comprises:
displaying the store information in the virtual space of the second anchor account.

4. The method according to any preceding claim, wherein
the item information of the target item comprises a first access portal of a store to which the target item belongs; and
said displaying (203) the item information of the target item in the virtual space of the second anchor account comprises:
displaying the first access portal in the virtual space of the second anchor account, wherein the first access portal is used to trigger an access to the store.

5. The method according to any preceding claim, wherein
the item information of the target item comprises a second access portal of a virtual space of the first anchor account; and
said displaying (203) the item information of the target item in the virtual space of the second anchor account comprises:
displaying the second access portal in the virtual space of the second anchor account, wherein the second access portal is configured to cause an access to the virtual space of the first anchor account to be triggered.

6. The method according to any preceding claim, wherein
said displaying (203) the item information of the target item in the virtual space of the second anchor account comprises:
displaying the item information of the target item in a first item list of the virtual space of the second anchor account; and
the method further comprises:
displaying item information of an item of the second anchor account in a second item list of the virtual space of the second anchor account.

7. The method according to any preceding claim, wherein said displaying (203) the item information of the target item in the virtual space of the second anchor account comprises:
displaying the item information of the target item in the virtual space of the second anchor account in response to live streaming time of the second anchor account reaching target time.

8. The method according to any preceding claim, further comprising:
displaying a live streaming announcement of the target item, wherein the live streaming announcement is configured to prompt an upcoming live streaming introduction to the item information of the target item.

9. A method for processing live streaming, performed by a server, comprising:
in response to receiving a joint live streaming request initiated by a first anchor account, sending (301) the joint live streaming request to a second anchor account, wherein the joint live streaming request is used to request joint live streaming with the second anchor account, the joint live streaming is performed to display, in a virtual space of the second anchor account, item information of a target item of the first anchor account;
acquiring (302) the item information of the target item in response to an acceptance of the joint live streaming request by the second anchor account; and
sending (303) the item information of the target item to the second anchor account, wherein the item information is used to trigger display of the item information of the target item in the virtual space of the second anchor account.

10. The method according to claim 9, wherein said in response to receiving the joint live streaming request initiated by the first anchor account, sending (301) the joint live streaming request to the second anchor account comprises:
acquiring anchor account information of the second anchor account from the joint live streaming request in response to receiving the joint live streaming request initiated by the first anchor account; and
sending the joint live streaming request to the second anchor account based on the anchor account information of the second anchor account.

11. The method according to claim 9 or 10, wherein said acquiring (302) the item information of the target item comprises:
acquiring the item information of the target item from an item information database based on an item identifier of the target item carried in the joint live streaming request, wherein item identifiers and item information of a plurality of items are stored in the item information database.

12. The method according to any of claims 9 to 11, further comprising:
associating the item information of the target item with the virtual space of the second anchor account.

13. The method according to any of claims 9 to 12, further comprising:
generating an electronic receipt of the target item based on the item information of the target item and anchor account information of the second anchor account, in response to trading of the target item in the virtual space of the second anchor account by viewers in the virtual space of the second anchor account.

14. The method according to claim 13, further comprising:
sending a target virtual resource to the second anchor account based on the anchor account information of the second anchor account carried in the electronic receipt of the target item, wherein the target virtual resource is a virtual resource required for the second anchor account to perform the joint live streaming.

15. The method according to claim 14, wherein the target virtual resource is determined based on a quantity of viewers in the virtual space of the second anchor account who perform item trading actions in the virtual space of the second anchor account; or the target virtual resource is determined based on item trading actions performed in the virtual space of the second anchor account by the viewers in the virtual space of the second anchor account.
